# EUROPEAN PATENT APPLICATION

(11) **EP 4 804 637 A1**
(43) Date of publication of application: **09.09.2026**
(21) Application number: 23957222.5
(22) Date of filing: 01.11.2023
(51) Int. Cl.: H04W 52/02

(54) **INFORMATION TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Novagraaf Technologies
(86) International application number: PCT/CN2023/129168
(87) International publication number: WO 2025/091349

(57) **Abstract**

An information transmission method and apparatus, device, and a storage medium, relating to the technical field of communications. The method is executed by an AMP STA. The method comprises: receiving a beacon frame sent by an AP, wherein the beacon frame is borne in a PPDU, and the PPDU has the same frame format as a WUR PPDU (610). The PPDU having the same frame format as the WUR PPDU is used to bear an AMP beacon frame without the need to independently design a corresponding PPDU frame format for the AMP STA, thereby effectively reducing the design complexity of a communication system.

## Description

### TECHNICAL FIELD

The embodiments of the present disclosure relate to the field of communication technology, and particularly to information transmission methods and apparatuses, a device, and a storage medium.

### RELATED ART

In the future, wireless fidelity (WiFi) systems may support ambient power (AMP) Internet of Things (IoT) devices, and the receiver of the AMP IoT device bears some similarities in structure to the current wake-up radios (WURs), such as low complexity and low power consumption. AMP IoT devices may coexist in the same system with devices supporting a EUR. Therefore, in downlink transmission, an access points (APs) need to support transmission of signals to both AMP IoT devices and WURs. How to enable APs to support transmission of signals to both AMP IoT devices and WURs is a problem that needs to be addressed.

### SUMMARY

The embodiments of the present disclosure provide methods and apparatuses for transmitting information, a device, and a storage medium. The technical solutions are as follows.

In one aspect, the embodiments of the present disclosure provide an information transmission method. The method is performed by an AMP station (STA), and the method includes:
receiving a beacon frame transmitted by an AP, wherein the beacon frame is carried in a physical layer protocol data unit (PPDU), and the PPDU has a same frame format as a WUR PPDU.

In another aspect, the embodiments of the present disclosure provide an information transmission method. The method is performed by an AP, and the method includes:
transmitting a beacon frame to an AMP STA, where the beacon frame is carried in a PPDU, and the PPDU has a same frame format as a WUR PPDU.

In another aspect, the embodiments of the present disclosure provide an information transmission device apparatus. The apparatus includes:
a receiving module, configured to receive a beacon frame transmitted by an AP, wherein the beacon frame is carried in a PPDU, and the PPDU has a same frame format as a WUR PPDU.

In another aspect, the embodiments of the present disclosure provide an information transmission device apparatus. The apparatus includes:
a transmitting module, configured to transmit a beacon frame to an AMP STA, wherein the beacon frame is carried in a PPDU, and the PPDU has a same frame format as a WUR PPDU.

In another aspect, the embodiments of the present disclosure provide a communication device. The communication device includes a processor and a memory. The memory stores one or more computer programs that, when executed by the processor, cause the communication device to implement the above methods for transmitting information. The communication device is a terminal device, or the communication device is a network device.

In another aspect, the embodiments of the present disclosure provide a computer-readable storage medium. The computer-readable storage medium stores one or more computer programs that, when executed by a processor, cause the processor to implement the above methods for transmitting information.

In another aspect, the embodiments of the present disclosure provide a chip. The chip includes a programmable logic circuit and/or one or more program instructions. The chip, when running, is caused to implement the above methods for transmitting information.

In another aspect, the embodiments of the present disclosure provide a computer program product. The computer program product includes one or more computer instructions stored in a computer-readable storage medium. The one or more computer instructions, when read and executed by a processor, cause the processor to implement the above methods for transmitting information.

The technical solutions provided in the embodiments of the present disclosure include the following beneficial effects.

By utilizing a PPDU having the same frame format as the WUR PPDU to carry the AMP beacon frames, there is no need to separately design a corresponding PPDU frame format for the AMP STA, thereby effectively reducing the design complexity of the communication system.

### BRIEF DESCRIPTION OF DRAWINGS

FIG. 1 is a schematic diagram of a network architecture according to some embodiments of the present disclosure;
FIG. 2 is a structural schematic diagram of a WUR PPDU according to some embodiments of the present disclosure;
FIG. 3 is a schematic diagram of on-off keying (OOK) modulation according to some embodiments of the present disclosure;
FIG. 4 is a schematic diagram of OOK modulation according to some embodiments of the present disclosure;
FIG. 5 is a schematic diagram of generating multicarrier (MC)-OOK signals through MCs according to some embodiments of the present disclosure;
FIG. 6 is a flowchart of an information transmission method according to some embodiments of the present disclosure;
FIG. 7 is a schematic diagram of a medium access control (MAC) frame structure according to some embodiments of the present disclosure;
FIG. 8 is a structural schematic diagram of a MAC header according to some embodiments of the present disclosure;
FIG. 9 is a structural schematic diagram of a Frame Control field according to some embodiments of the present disclosure;
FIG. 10 is a block diagram of an information transmission apparatus according to some embodiments of the present disclosure;
FIG. 11 is a block diagram of an information transmission apparatus according to some embodiments of the present disclosure;
FIG. 12 is a structural schematic diagram of an AMP STA according to some embodiments of the present disclosure; and
FIG. 13 is a structural schematic diagram of an AP according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenario described in the embodiments of the present disclosure are intended to describe the technical solutions according to the embodiments of the present disclosure more clearly, and are not intended to the technical solutions according to the embodiments of the present disclosure. Those of ordinary skill in the art may understand that, with the evolution of the network architecture and emergence of new service scenarios, the technical solutions according to the embodiments of the present disclosure are also applicable to similar technical problems.

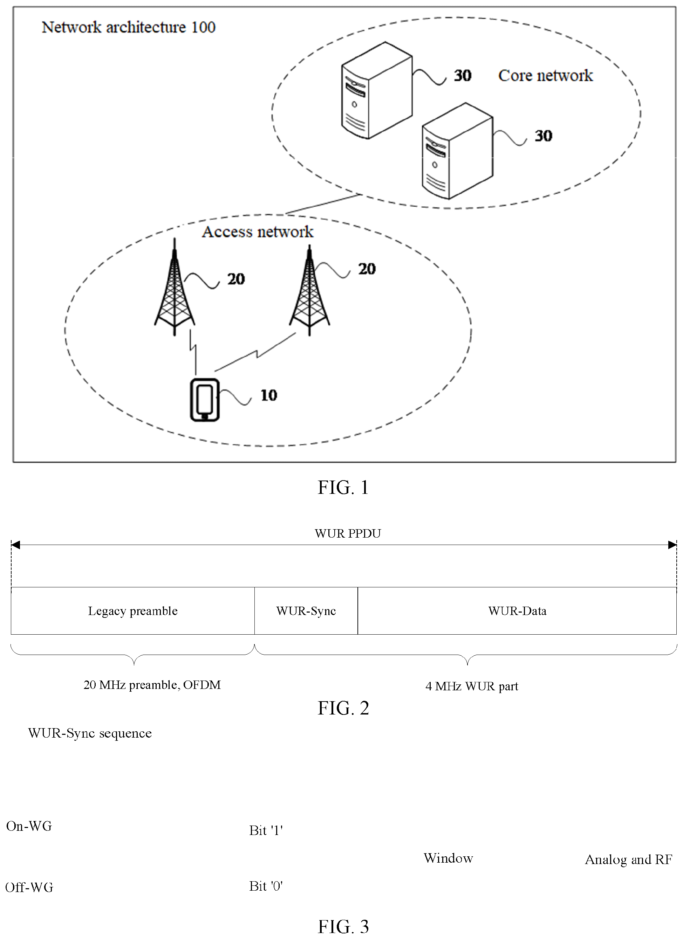

FIG. 1 is a schematic structural diagram of a network architecture 100 according to some embodiments of the present disclosure. The network architecture 100 may include: a terminal device 10, an access network device 20, and a core network element 30.

The terminal device 10 may refer to a user equipment (UE), an STA, an access terminal, a user element, a user station, a mobile station, a mobile platform, a remote station, a remote terminal, a mobile device, a wireless communication device, a user agent, or a user device. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device, or other processing devices connected to a wireless modem, a in-vehicle device, a wearable device, a terminal device in a 5^{th} Generation system (5G), or a terminal device in a future-evolved public land mobile network (PLMN), which is not limited in the present disclosure. For ease of description, the above devices are collectively referred to as the terminal device. Typically, one or more terminal devices are present, and the one or more terminal devices 10 may be deployed within a cell managed by each access network device 20. The terminal device may also be referred to simply as a terminal or a UE, and those skilled in the art may understand its meaning.

The access network device 20 is a device deployed in the access network to provide the wireless communication function for the terminal device 10. The access network device 20 may include various forms of a macro base station, a micro base station, a relay station, an AP, and the like. In a system employing different radio access technologies, the name of a device with an access network device function may vary. For example, in a 5G NR system, the device is referred to as a gNodeB or gNB. As communication technologies evolve, the term "access network device" may change. For ease of description, in the embodiments of the present disclosure, the devices providing a wireless communication function for the terminal device 10 are collectively referred to as the access network device. In some embodiments, a communication relationship may be established between the terminal device 10 and the core network element 30 via the access network device 20. Exemplarily, in a long term evolution (LTE) system, the access network device 20 may be an evolved universal terrestrial radio access network (EUTRAN) or one or more eNodeBs in the EUTRAN; in a 5G NR system, the access network device 20 may be a radio access network (RAN) or one or more gNBs in the RAN. In the embodiments of the present disclosure, unless otherwise specified, the term "network device" refers to the access network device 20, e.g., a base station.

The core network element 30 is a network element deployed in a core network. The main functions of the core network element 30 are to provide user connectivity, manage users, and bear services, serving as an interface for a bearer network to connect to an external network. For example, the core network element in the 5G NR system may include entities such as an access and mobility management function (AMF) entity, a user plane function (UPF) entity, and a session management function (SMF) entity.

In some embodiments, the access network device 20 and the core network element 30 communicate with each other via an air interface technology, such as an NG interface in the 5G NR system. The access network device 20 and the terminal device 10 communicate with each other also via the air interface technology, such as a Uu interface.

The "5G NR system" in the embodiments of the present disclosure may also be referred to as the 5G system or the NR system, but those skilled in the art may understand its meaning. The technical solutions described in the embodiments of the present disclosure may be applied to LTE systems, as well as to the 5G NR system, and to subsequent evolution systems of the 5G NR system (such as B5G (Beyond 5G) systems, 6G systems (6th Generation System, the sixth-generation mobile communication system)), and may also be applied to other communication systems such as the NB-IoT (Narrow Band Internet of Things) system. The present disclosure does not limit this.

In the embodiments of the present disclosure, a network device may provide services to a cell. Terminal devices communicate with the network device through transmission resources (such as frequency domain resources, or spectrum resources) on the carrier used by the cell. The cell may be the one corresponding to the network device (such as a base station). The cell may belong to a macro base station or a base station corresponding to a small cell. Here, small cells may include: Metro cell, Micro cell, Pico cell, Femto cell, etc. These small cells have characteristics of small coverage and low transmission power, and are suitable for providing high-rate data transmission services.

Before introducing the technical solution of the present disclosure, some relevant technical knowledge involved in the present disclosure will be explained first. The following related technologies may be arbitrarily combined with the technical solutions of the embodiments of the present disclosure as optional solutions, and all of them fall within the protection scope of the embodiments of the present disclosure. The embodiments of the present disclosure include at least some of the following contents.

### 1. Cellular passive IoT

With the increasing application of 5G in various industries, the types and application scenarios of connected objects are becoming more diverse, leading to higher requirements for price and power consumption of a communication terminal. The application of battery-free, low-cost passive IoT devices has become a key technology in cellular IoT, enriching the types and number of connected terminals in the 5G network and truly realizing the Internet of Everything. Among them, passive IoT devices may be based on existing zero-power devices, such as a radio frequency identification (RFID) technology, and extended to be suitable for cellular IoT.

### II. Classification of a zero-power terminal device

Based on the energy sources and usage patterns of a zero-power terminal device, the device may be categorized as follows:

### 1) Passive zero-power terminal device

A zero-power terminal device does not require an internal battery. When the zero-power terminal device is in proximity of a network device (such as a reader in an RFID system), it falls within the near-field range established by an antenna radiation of the network device. The antenna of the zero-power terminal device generates an induced current via electromagnetic induction, and the induced current drives the low-power chip circuit of the zero-power terminal device. This enables the demodulation of forward link signals and the modulation of reverse link signals. For the reverse link, the zero-power terminal device uses a backscatter or a low-power active transmission as the communication method for signal transmission.

Consequently, the passive zero-power terminal device, whether in the forward link or the reverse link, does not require a built-in battery to operate, and thus the passive zero-power terminal device represents a truly zero-power terminal.

The passive zero-power terminal device does not require a battery, and both the radio frequency (RF) circuit and the baseband circuit are very simple. For example, neither of the circuits needs a component such as a low noise amplifier (LNA), a power amplifier (PA), a crystal oscillator, or an analog-to-digital converter (ADC). Therefore, the passive zero-power terminal has several advantageous characteristics such as a compact size, a light weight, a very low price and a long service life.

### 2) Semi-passive zero-power terminal device

A semi-passive zero-power terminal device does not need a conventional battery either. Instead, an RF energy harvesting module is used to collect radio wave energy, or an energy harvesting module is used to collect energy (such as solar energy, thermal energy, mechanical vibration energy, etc.) from the environment. The collected energy is stored in an energy storage unit (such as a capacitor). Subsequently, the energy storage unit may power the low-power chip circuit of the zero-power terminal device, enabling the demodulation of forward link signals and the modulation of reverse link signals. For the reverse link, the zero-power terminal device uses a backscatter or low-power active transmission as the communication method for signal transmission.

Consequently, the semi-passive zero-power terminal device, whether in the forward link or the reverse link, does not require a built-in battery. Although the semi-passive zero-power terminal device uses energy stored in capacitors during operation, the energy comes from the radio energy collected by the energy harvesting module, and thus the semi-passive zero-power terminal device also represents a truly zero-power terminal.

The semi-passive zero-power terminal device inherits many advantages from the passive zero-power terminal device, characterized by several benefits such as a compact size, a light weight, a very low price, and a long service life.

### 3) Active zero-power terminal device

In some scenarios, the zero-power terminal may also be an active zero-power terminal, which may include a built-in battery. The battery is used to power the low-power chip circuits of the zero-power terminal device, enabling the demodulation of forward link signals and the modulation of reverse link signal. However, for the reverse scattering link, the zero-power terminal device uses either a backscatter or an active transmission to achieve signal transmission. Despite having a built-in battery, the active zero-power terminal device is extremely low in power consumption and complexity, enabling the active zero-power terminal device to operate with a smaller battery capacity, thereby achieving lower cost and smaller size. The built-in battery may also function as an energy storage unit for an energy harvesting module to store the harvested ambient energy, enabling a longer maintenance cycle or even maintenance-free operation.

The active zero-power terminal device, powered by the built-in battery, extends the communication distance and improves the reliability of communication. As such, the active zero-power terminal is applied in scenarios where relatively high requirements are placed on communication distance and read latency.

### III. Device based on ambient energy

In both NR systems and WiFi systems, the battery-free and low-cost characteristics of a device may support the low-cost and maintenance-free deployment of IoT devices on a larger scale. Currently, how to support the IoT device based on ambient energy, known as an ambient IoT device or AMP IoT device, in NR systems and WiFi systems is explored in standards. The energy required to operate the device comes from ambient energy harvesting, which may be sourced from a wireless signal, solar energy, thermal energy, etc. The device is similar to the passive or semi-passive device in zero-power communication.

### IV. Wake-up signal

In 802.11ba technology, a WUR signal is used to achieve power saving for a device. A WUR AP notifies a WUR non-AP STA (i.e., the WUR STA) of energy saving operations via a WUR wake-up frame. The wake-up frame is carried within a WUR PPDU frame. As illustrated in FIG. 2, the WUR PPDU frame includes three parts: a legacy preamble, a WUR-Sync, and WUR-Data. The legacy preamble protects the WUR-Sync and WUR-Data parts and is a non-WUR part retained for compatibility. The legacy preamble employs a traditional orthogonal frequency division multiplexing (OFDM) modulation and a bandwidth of 20 MHz. The WUR-Sync is used to assist in identifying and demodulating the WUR-Data part, and the WUR-Data part is used to carry a WUR physical layer (PHY) service data unit (PSDU).

The WUR-Sync part and the WUR-Data part use an OOK modulation and a 4 MHz bandwidth. The principle of the OOK modulation is to convert the amplitude of a carrier signal to non-zero and zero values, i.e., "On" and "Off", respectively, representing information bits. The OOK is also referred to as binary amplitude shift keying (2ASK). As illustrated in FIG. 3, the WUR-Sync part carries a synchronization sequence that is repeated twice, with bit 1 modulated as "On" and bit 0 modulated as "Off.

The synchronization sequence uses a predefined sequence W consisting of 32 bits, wherein different sequences indicate the data rates adopted for different WUR-Data parts. The synchronization sequence corresponding to a WUR low data rate (LDR) is as follows:
W = [1 0 1 0 0 1 0 0 1 0 1 1 1 0 1 1 0 0 0 1 0 1 1 1 0 0 1 1 1 0 0 0]

The synchronization sequence corresponding to WUR high data rate (HDR) is as follows:
W = [0 1 0 1 1 0 1 1 0 1 000 1 00 1 1 1 0 1 000 1 1 000 1 1 1]

Each bit in the WUR-Sync part is mapped into a 2 µs-long MC-OOK symbol via OOK modulation.

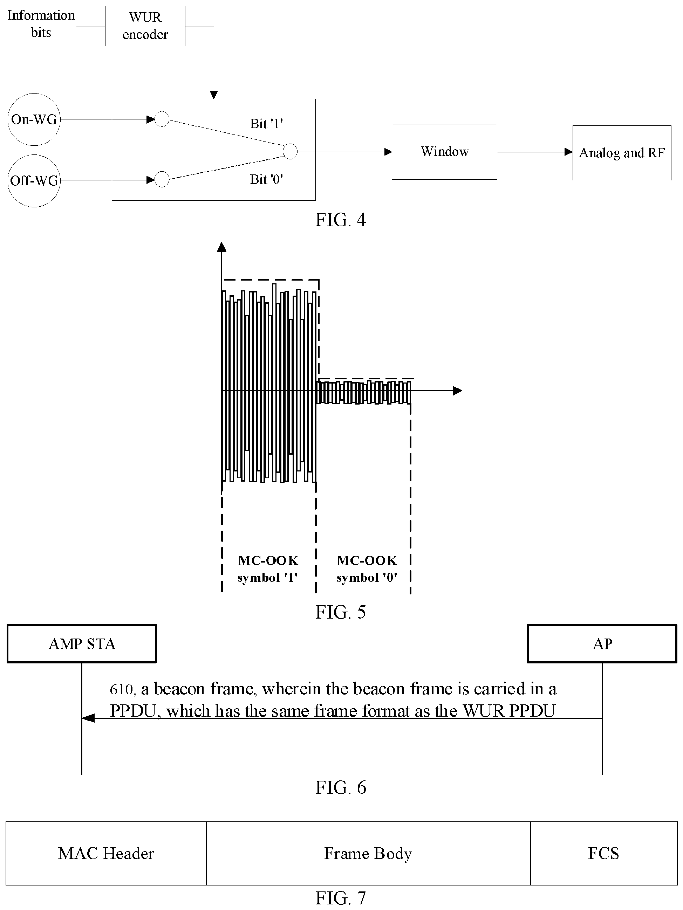

As illustrated in FIG. 4, the WUR-Data part carries user information. Following an encoding, the user information is modulated via OOK to form MC-OOK symbols of corresponding lengths.

The symbol lengths corresponding to WUR LDR and WUR HDR in MC-OOK are 4 µs and 2 µs, respectively.

The above OOK signal is generated via MC modulation, hence it is referred to as a MC-OOK signal. The generation of MC-OOK signals may use existing MC modulation schemes such as an OFDM modulation to produce an OOK signal, such that good compatibility with existing OFDM systems is maintained and the transmitter complexity introduced by implementing WUR signals is reduced. FIG. 5 is a schematic diagram of the MC-OOK signals generated via the MC modulation according to some embodiments of the present disclosure. By assigning corresponding amplitude values to a plurality of subcarriers in a frequency-domain, a frequency-domain signal is obtained, and the frequency-domain signal is converted via an inverse discrete Fourier transform (IDFT) into a time-domain signal, of which the waveform approximates the waveform formed by ASK modulation, wherein bit 1 is represented by the high level of the signal and bit 0 is represented by the low level of the signal.

In the future, WiFi systems may support AMP IoT devices, and the structure of the AMP IoT device bears some similarities in structure to the WURs in current 802.11ba technology, such as low complexity and low power consumption. AMP IoT devices may coexist in the same system with devices supporting 802.11ba. Therefore, in downlink transmission, the AP needs to support transmission of signals to both AMP IoT devices and WURs. How to enable the AP to support transmission of signals to both AMP IoT devices and WURs is an issue to be addressed.

As such, the embodiments of the present disclosure provide a solution that can reuse the frame structure of the WUR PPDU to transmit the PPDU of the AMP STA, eliminating the need to design a new PPDU frame format specifically for the AMP STA, thereby reducing the design complexity of the system.

FIG. 6 is a flowchart of an information transmission method according to some embodiments of the present disclosure. The method is applicable to the network architecture illustrated in FIG. 1, and the method includes the following step 610.

In step 610, an AMP STA receives a beacon frame transmitted by an AP. The beacon frame is carried in a PPDU, which has the same frame format as the WUR PPDU.

Correspondingly, the AP transmits the beacon frame to the AMP STA.

In some embodiments, the AMP STA refers to that the STA is an AMP IoT device.

In some embodiments, the downlink signals of the AMP STA and the WUR share the same waveform, such as an OOK waveform.

In some embodiments, the WUR, as the wake-up receiver of the WUR STA, mainly functions to receive wake-up signals when the primary receiver is turned off, thus achieving power saving for the WUR STA. The WUR beacon frame is carried in the WUR PPDU, but the WUR PPDU only carries timestamp information and basic service set (BSS) parameter update indication information. The timestamp information is used for time synchronization, and the BSS parameter update indication information is used to indicate significant updates to BSS parameters. The beacon frame of the WUR STA is still received through the primary receiver. As a result, it's difficult for the reserved bits for carrying the WUR beacon frame in the WUR PPDU to meet the requirements of the beacon frame of the AMP STA. How to reuse the frame format of the WUR PPDU to transmit beacon frames to the AMP STA requires further discussion.

In some embodiments, the MAC frame format also includes a MAC header, which is used to carry the type information of the PPDU. Firstly, the frame format of the WUR PPDU is introduced. As a frame structure of the physical layer, data in the PPDU is encapsulated at the MAC layer. The MAC frame format of the WUR is illustrated in FIG. 7, which includes three parts: a MAC header, a frame body, and a frame check sequence (FCS), also known as a frame tail.

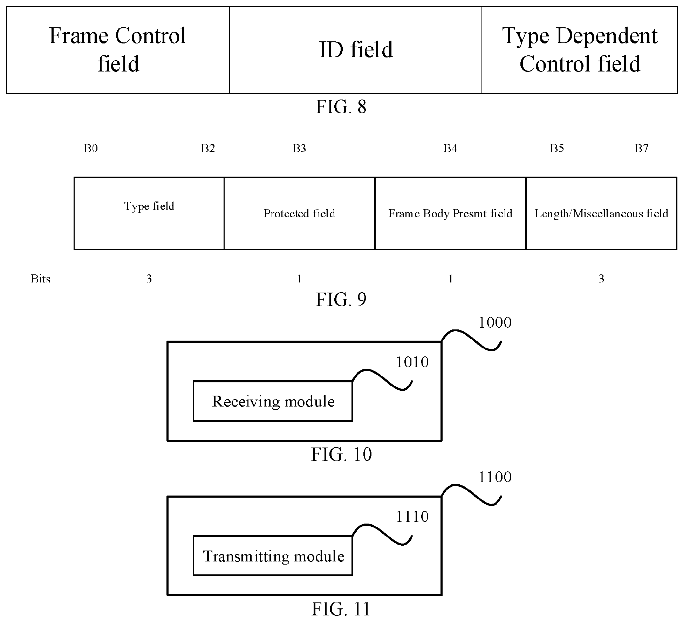

In some embodiments, the MAC header includes a Frame Control field and an identifier (ID) field. The Frame Control Field includes a Type field and a Frame Body present field. The Type field is used to indicate the type of the PPDU, and the Frame Body Present field is used to indicate the state of the frame body. The ID field is used to carry the ID of the AP. As illustrated in FIG. 8, the MAC header includes three parts: a Frame Control field, an ID field, and a Type Dependent Control field. As illustrated in FIG. 9, the Frame Control field includes the following information fields: a Type field, a Protected field, a Frame Body Present field, and a Length/Miscellaneous field. The Type field is used to indicate the type of the PPDU. As illustrated in Table 1, in the WUR PPDU, the Type field may follow the following format to indicate the type of the WUR PPDU.

**Table 1: WUR Frame Types**

| Type | Type description |
|---|---|
| 0 | WUR Beacon |
| 1 | WUR Wake-up |
| 2 | WUR Vendor Specific |
| 3 | WUR Discovery |
| 4 | WUR Short Wake-up |
| 5-7 | Reserved |

In some embodiments, the Frame Body Present field is used to indicate the state of the frame body. In the WUR PPDU, if the WUR PPDU is used to indicate a WUR beacon frame, the Frame Body Present field is used to indicate the absence of a Frame Body field, and the timestamp information in the WUR beacon frame is indicated through the Type Dependent Control field. Illustratively, in the WUR PPDU, if the PPDU carries a WUR beacon frame, the Frame Body Present field indicates the absence of the Frame Body field, the Type Dependent Control field is used to indicate the timestamp information, and the Type field indicates 0, indicating that the PPDU is used to carry a WUR beacon.

In some embodiments, the data of the beacon frame is carried in the frame body of the MAC frame format.

Based on the introduction of the WUR PPDU mentioned above, it can be seen that the data of the beacon frame of the AMP STA is more suitable to be carried in the frame body of the MAC frame format. However, a new problem arises in this scenario, that is, it is difficult for the AMP STA and the WUR STA to distinguish whether the PPDU transmitted by the AP is intended for the AMP STA or the WUR STA. To address this issue, based on the frame format of the WUR PPDU, the embodiments of the present disclosure provide the following solutions that can be used to distinguish the data content carried in the PPDU transmitted by the AP.

### Solution 1: Using the Type field in the Frame Control field to distinguish between the WUR PPDU and the AMP PPDU

1. The Type field indicates a first value.

In some embodiments, if the Frame Body Present field indicates a first state and the Type field indicates a first value, the AMP STA parses the beacon frame, wherein the first value is used to indicate that the PPDU carries a WUR beacon frame.

Correspondingly, if the beacon frame is transmitted to a first STA, the AP indicates the first state in the Frame Body Present field, and the Type field indicates the first value, which is used to indicate that the PPDU carries a WUR beacon frame.

In some embodiments, if the Frame Body Present field indicates a second state, the AMP STA discards the beacon frame.

Correspondingly, if the beacon frame is transmitted to a second STA, the AP indicates the second state in the Frame Body Present field.

In some embodiments, the first state represents the presence of the Frame Body field, while the second state represents the absence of the Frame Body field. In some embodiments, since the data of the beacon frame of the AMP STA is carried in the MAC frame format, if the PPDU is used to transmit the beacon frame of the AMP STA, the Frame Body Present field should indicate the first state.

However, in the WUR PPDU, when certain content is indicated, the Frame Body Present field may also indicate the first state. Consequently, relying solely on the Frame Body Present field, it is impossible to distinguish whether the PPDU is transmitted to the WUR STA or the AMP STA. Therefore, another field is needed to assist in the distinction. In some embodiments, the Type field is used in combination with the Frame Body Present field to distinguish whether the PPDU is transmitted to the WUR STA or the AMP STA.

In some embodiments, for the WUR PPDU, if the PPDU indicates a WUR beacon frame, the Type field of the PPDU indicates a first value, which represents that the PPDU carries a WUR beacon frame, and the Frame Body Present field indicates a second state, meaning that there is no Frame Body field. In this scenario, if the Frame body Present field indicates the first state, meaning that there is a Frame Body field, and the Type field indicates a first value, the WUR STA considers the PPDU to be erroneous and discards the PPDU. Therefore, this solution can be utilized to distinguish whether the PPDU is transmitted to the WUR STA or the AMP STA.

Illustratively, taking the format of the Type field illustrated in Table 1 as an example, if the current PPDU is a WUR PPDU used to transmit a beacon frame to the WUR STA, then in the MAC header of this PPDU, the Frame Body Present field indicates the absence of a Frame Body field, and the Type field indicates a first value 0. In this scenario, the WUR STA receives this PPDU, and can know that this PPDU is transmitted to the WUR STA itself, whereas the WUR STA parses this PPDU and obtains a WUR beacon frame.

In some embodiments, for the AMP STA, if the PPDU is used to indicate the beacon frame of the AMP STA, the Frame Body field of the PPDU should be in the first state, indicating the presence of the Frame Body field. If the AMP STA receives a PPDU whose Frame Body Present field indicates the second state, indicating the absence of the Frame Body field, the AMP STA may determine that the PPDU is not transmitted to the AMP STA. Therefore, the AMP STA discards the PPDU and does not parse the beacon frame carried in the PPDU.

2. The Type field indicates a second value.

In some embodiments, if the Type field indicates a second value, the AMP STA parses the beacon frame, wherein the second value is used to indicate that the PPDU carries an AMP beacon frame.

Correspondingly, if the beacon frame is transmitted to a first STA, the AP indicates the second value in the Type field, and the second value is used to indicate that the PPDU carries an AMP beacon frame.

In some embodiments, if the Frame Body Present field indicates a first state and the Type field indicates a third value, the AMP STA discards the beacon frame.

Correspondingly, if the beacon frame is transmitted to a second STA, the AP indicates the first state in the Frame Body Present field, and the Type field indicates the third value.

In some embodiments, the third value refers to a value other than the first value and the second value.

In some embodiments, there is a reserved bit in the Type field of the WUR PPDU, and the value corresponding to the reserved bit does not indicate the type of the WUR corresponding to the PPDU.

In some embodiments, for the WUR STA, if the WUR STA receives a PPDU whose Type field indicates the value corresponding to the reserved bit, the WUR STA considers the PPDU as erroneous and discards the PPDU. Therefore, the reserved bit in the Type field may be utilized to indicate that the PPDU carries a beacon frame for the AMP STA.

In some embodiments, the reserved bit may be defined as a bit used to indicate that the PPDU carries an AMP beacon frame. Taking the format of the Type field illustrated in Table 1 as an example, any one or more of the frames with types 5 to 7 are defined as AMP beacon frames, if the AMP STA receives a PPDU, and the Frame Body Present field of the PPDU indicates the first state and the Type field indicates the corresponding value of the AMP beacon frame, then the AMP STA receives the PPDU and parses the PPDU to obtain a beacon frame.

In some embodiments, the reserved bit may not be defined. If the value indicated in the Type field does not have a defined function, it is assumed by default that the value indicates an AMP beacon frame.

In some embodiments, except for the first value and the reserved bit, other predefined bits in the Type field indicate other information types of the WUR STA. The Frame Body Present fields of the PPDUs corresponding to these information types indicate the first state. Therefore, if the AMP STA receives a PPDU whose Frame Body Present field indicates the first state, the AMP STA cannot determine whether the PPDU is transmitted to the AMP STA solely relying on the Listening Present field. In this case, the AMP STA may use the Type field to assist in determination. If the Type field of the PPDU indicates the third value and the Frame Body Present field indicates the first state, the AMP STA determines that the PPDU is transmitted to the WUR STA and discards the PPDU.

Through the above method, the AMP STA and the WUR STA can determine whether the PPDU is transmitted to the AMP STA based on the content indicated in the Type field and the content indicated in the Frame Body Present field, enabling the AMP STA to correctly receive the AMP beacon frame while avoiding the WUR STA from erroneously receiving the AMP beacon frame.

### Solution 2: Using the ID field in the MAC header to distinguish between the WUR PPDU and the AMP PPDU

In some embodiments, for the WUR, as illustrated in Table 2, the ID field may be used to indicate the following information:

**Table 2: ID of WUR Frame**

| ID field | ID description |
|---|---|
| Transmitter ID | Identifier of the transmitting AP |
| ID | Identifier of the nontransmitted BSSID |
| WUR Group ID | Identifier of a group of receiving WUR non-AP STAs |
| WUR ID | Identifier of an individual receiving WUR non-AP STA |
| OUI1 | The 12 least significant bits (LSBs) of the organizationally unique identifier (OUI) |

In some embodiments, when the AP transmits a WUR beacon, the ID field is filled with the Transmitter ID.

In some embodiments, when the AMP STA receives an AMP beacon frame transmitted by the AP, the ID field may be filed with the ID of the AP, as long as this ID is distinguished from the Transmitter ID filled in the ID field of the WUR beacon frame. Based on the ID filled in the ID field, the AMP STA and the WUR STA can distinguish whether the PPDU is transmitted to the AMP STA or the WUR STA.

In some embodiments, if the ID field indicates a first ID, the AMP STA parses the beacon frame.

In some embodiments, if the ID field indicates a second ID, the AMP STA discards the beacon frame.

Correspondingly, if the PPDU is transmitted to the first STA, the AP indicates the first ID in the ID field.

If the PPDU is transmitted to the second STA, the AP indicates the second ID in the ID field.

In some embodiments, the second ID is the Transmitter ID.

In some embodiments, the first ID is any ID different from the Transmitter ID.

In some embodiments, the first ID is calculated based on the second ID. The present disclosure does not limit the rules for calculating the first ID based on the second ID.

Illustratively, the first ID is obtained by adding 1 to the second ID.

In some embodiments, the second ID is the ID of the AP obtained by the AMP STA during the association process with the AP, and this ID may be an ID other than the Transmitter ID of the AP.

Through the above method, the AMP STA and the WUR STA can distinguish whether the PPDU is transmitted to the WUR STA or the AMP STA solely based on the ID filled in the ID field, enabling the AMP STA to correctly receive the AMP beacon frame while preventing the WUR STA from erroneously receiving the AMP beacon frame.

In some embodiments, solution 1 and solution 2 may also be used in combination. As long as one of solution 2 or solution 1 meets the conditions, it can be determined whether the PPDU is transmitted to the AMP STA or the WUR STA. For example, the Frame Body Present field of the PPDU indicates the first state, the Type field indicates the first value, and the ID field indicates the first ID. When receiving the PPDU, if the AMP STA first obtains the ID field through parsing, the AMP STA may determine, based on the ID, that the PPDU is used to carry an AMP beacon frame. When receiving the PPDU, if the AMP STA first obtains the Frame Body Present field and the Type field through parsing, the AMP STA may determine, based on the Frame Body Present field and the Type field, that the PPDU is used to carry an AMP beacon frame.

The technical solutions provided in the embodiments of the present disclosure effectively reduces the design complexity of the communication system by using a PPDU with the same frame format as the WUR PPDU to carry the AMP beacon frame, without the need to separately design a corresponding PPDU frame format for the AMP STA.

In the method embodiments described above, the technical solutions of the present disclosure are introduced and explained solely from the perspective of the interaction between the AMP STA and the AP. The steps executed by the AMP STA mentioned above may be implemented separately as an information transmission method on the AMP STA side, and the steps executed by the AP mentioned above may be implemented separately as an information transmission method on the AP side. Furthermore, the embodiments provided in the present disclosure may be arbitrarily combined to form new embodiments, all of which fall within the scope of protection of the present disclosure.

The following is an apparatus embodiment of the present disclosure, which may be used to implement the method embodiment of the present disclosure. For details not disclosed in the apparatus embodiment, refence may be made to the method embodiments of the present disclosure.

FIG. 10 is a block diagram of an information transmission device apparatus according to some embodiments of the present disclosure. The apparatus possesses the functionality to implement the above examples of the information transmission method. This functionality may be achieved through hardware or through software executed by hardware. The apparatus may be the AMP STA introduced above, or may be integrated within the AMP STA. As illustrated in FIG. 10, the apparatus1000 may include a receiving module 1010.

The receiving module 1010 is configured to receive a beacon frame transmitted by an AP, wherein the beacon frame is carried in a PPDU, the PPDU has the same frame format as a WUR PPDU, and the first STA is an AMP STA.

In some embodiments, the data of the beacon frame is carried in the frame body of a MAC frame format.

In some embodiments, the MAC frame format further includes a MAC header, which is used to carry the type information of the PPDU.

In some embodiments, the MAC header includes a Frame Control field and an ID field; wherein the Frame Control field includes a Type field and a Frame Body Present field, the Type field is used to indicate the type of the PPDU, and the Frame Body Present field is used to indicate the state of the frame body; and the ID field is used to carry the ID of the AP.

In some embodiments, the apparatus further includes a processing module (not illustrated in the figure).

The processing module is configured to parse the beacon frame if the Frame Body Present field indicates a first state and the Type field indicates a first value, wherein the first value is used to indicate that the PPDU carries a WUR beacon frame; or
the processing module is configured to parse the beacon frame if the Type field indicates a second value, wherein the second value is used to indicate that the PPDU carries an AMP beacon frame; or
the processing module is configured to discard the beacon frame if the Frame Body Present field indicates a second state; or
the processing module is configured to discard the beacon frame if the Frame Body Present field indicates a first state and the Type field indicates a third value.

In some embodiments, the processing module is further configured to parse the beacon frame if the ID field indicates a first ID; or
the processing module is further configured to discard the beacon frame if the ID field indicates a second ID.

The technical solutions provided in the embodiments of the present disclosure can effectively reduce the design complexity of the communication system by using a PPDU with the same frame format as the WUR PPDU to carry the AMP beacon frame, without the need to separately design a corresponding PPDU frame format for the AMP STA.

FIG. 11 is a block diagram of an information transmission device apparatus according to some embodiments of the present disclosure. The apparatus possesses the functionality to implement the above examples of the information transmission method. This functionality may be achieved through hardware or through software executed by hardware. The apparatus may be the AP introduced above, or may be integrated into the AP. As illustrated in FIG. 11, the apparatus 1100 may include a receiving module 1110.

The transmitting module 1110 is configured to transmit a beacon frame to an AMP STA. The beacon frame is carried in a PPDU, and the PPDU has the same frame format as a WUR PPDU.

In some embodiments, the data of the beacon frame is carried in the frame body of a MAC frame format.

In some embodiments, the MAC frame format further includes a MAC header, which is used to carry the type information of the PPDU.

In some embodiments, the MAC header includes a Frame Control field and an ID field; wherein the Frame Control field includes a Type field and a Frame Body Present field, the Type field is used to indicate the type of the PPDU, and the Frame Body Present field is used to indicate the state of the frame body; and the ID field is used to carry the ID of the AP.

In some embodiments, the apparatus further includes a processing module (not illustrated in the figure).

The processing module is configured that if the beacon frame is transmitted to a first STA, the Frame Body Present field indicates a first state, and the Type field indicates a first value, wherein the first value is used to indicate that the PPDU carries a WUR beacon frame; or
the processing module is configured that if the beacon frame is transmitted to a first STA, the Type field indicates a second value, wherein the second value is used to indicate that the PPDU carries an AMP beacon frame; or
the processing module is configured that if the beacon frame is transmitted to a second STA, the Frame Body Present field indicates a second state; or
the processing module is configured that if the beacon frame is transmitted to a second STA, the Frame Body Present field indicates a first state and the Type field indicates a third value.

In some embodiments, the processing module is further configured that the ID field indicates a first ID if the beacon frame is transmitted to a first STA; or
the processing module is further configured that the ID field indicates a second ID if the beacon frame is transmitted to a second STA.

The technical solutions provided in the embodiments of the present disclosure can effectively reduce the design complexity of the communication system by using a PPDU with the same frame format as the WUR PPDU to transmit AMP beacon frames, without the need to separately design a corresponding PPDU frame format for the AMP STA.

It should be noted that the apparatus according to the above embodiments is exemplified solely based on the division of the various functional modules to illustrate its functionality. In practical applications, the above functions may be allocated to different functional modules according to actual needs, that is, the content structure of the apparatus may be divided into different functional modules to complete all or part of the functions described above.

Regarding the apparatus in the above embodiments, the specific ways in which each module performs operations have been described in detail in the embodiments related to the method, and will not be elaborated here.

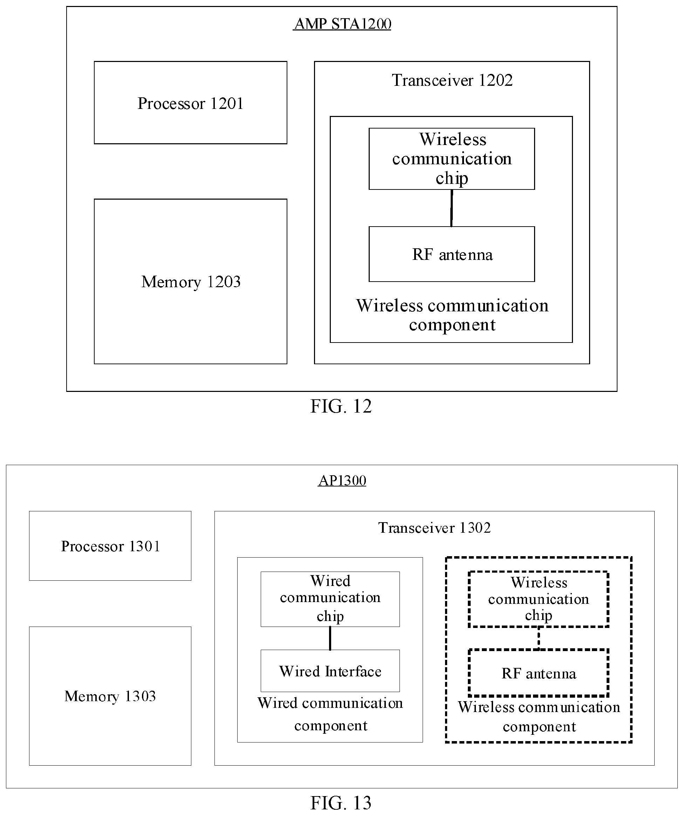

FIG. 12 is a structural schematic diagram of an AMP STA according to some embodiments of the present disclosure. The AMP STA 1200 may include: a processor 1201, a transceiver 1202, and a memory 1203. The transceiver 1202 is configured to implement transmission or reception functions, such as implementing the above functions of the receiving module 1010. The processor 1201 may be configured to execute other processing functions or to control transmission and/or reception, such as implementing the functions of the above processing module.

The processor 1201 includes one or more processing cores, and executes various functional applications and information processing by running software programs and modules.

The transceiver 1202 may include a receiver and a transmitter, for example, which may be implemented as a single wireless communication component. This wireless communication component may include a wireless communication chip and an RF antenna.

The memory 1203 may be connected to the processor 1201 and the transceiver 1202.

The memory 1203 may be configured to store computer programs executed by the processor, and the processor 1201 is configured to execute the computer programs to implement the various steps in the above-mentioned method embodiments.

In some embodiments, the transceiver 1202 is configured to receive a beacon frame transmitted by an AP, wherein the beacon frame is carried in a PPDU, and the PPDU has the same frame format as a WUR PPDU.

For details not disclosed herein, reference may be made to the above embodiments, which are not repeated herein.

In addition, the memory may be implemented by any type of volatile or non-volatile storage device, or a combination thereof. Volatile or non-volatile storage devices include, but are not limited to: magnetic or optical disks, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

FIG. 13 is a structural schematic diagram of an AP according to some embodiments of the present disclosure. The AP 1300 may include: a processor 1301, a transceiver 1302, and a memory 1303. The processor 1301 is configured to implement the functions of the above processing module, and the transceiver 1302 is configured to implement the functions of the above transmitting module 1110.

The processor 1301 includes one or more processing cores. By executing software programs and modules, the processor 1301 performs various functional applications and information processing. The processor 1301 is configured to execute the steps other than the transmitting and receiving steps performed by the AMP STA in the above-mentioned method embodiments.

The transceiver 1302 may include a receiver and a transmitter, which, for instance, may be implemented as a single wireless communication component. This wireless communication component may include a wireless communication chip and an RF antenna. The transceiver 1302 is configured to execute the transmitting and/or receiving steps performed by the AMP STA in the above method embodiments.

The memory 1303 may be connected to the processor 1301 and the transceiver 1302.

The memory 1303 may be configured to store computer programs executed by the processor, and the processor 1301 is configured to execute the computer programs to implement the various steps in the above-mentioned method embodiments.

In addition, the memory may be implemented by any type of volatile or non-volatile storage device, or a combination thereof. Volatile or non-volatile storage devices include, but are not limited to: magnetic or optical disks, an EEPROM, an EPROM, an SRAM, a ROM, a magnetic memory, a flash memory, and a PROM.

In some embodiments, the transceiver 1302 is configured to transmit a beacon frame to an AMP STA, wherein the beacon frame is carried in a PPDU, and the PPDU has the same frame format as a WUR PPDU.

For details not disclosed herein, reference may be made to the above embodiments, which are not repeated herein.

The embodiments of the present disclosure further provide a computer-readable storage medium, storing one or more computer programs. The one or more computer programs, when executed by a processor, cause the processor to implement the above information transmission method on the AMP STA side, or to implement the above information transmission method on the AP side. Optionally, the computer-readable storage medium may include: a ROM, a random-access memory (RAM), solid state drives (SSDs), or optical discs, etc. The RAM may include a resistance random access memory (ReRAM) and a dynamic random access memory (DRAM).

The embodiments of the present disclosure further provide a chip, which includes a programmable logic circuit and/or one or more program instructions. The chip, when running, is caused to implement the above information transmission method on the AMP STA side, or to implement the above information transmission method on the AP side.

The embodiments of the present disclosure further provide a computer program product, which includes one or more computer programs stored in a computer-readable storage medium. A processor reads and executes the one or more computer programs from the computer-readable storage medium to implement the above information transmission method on the AMP STA side, or implement the above information transmission method on the AP side.

It should be understood that the term "indication" mentioned in the embodiments of the present disclosure may be direct indication, indirect indication, or even indicate a correlation. For instance, A indicating B may mean that A directly indicates B, such as B being obtainable through A; it may also mean that A indirectly indicates B, such as A indicating C, and B being obtainable through C; it may also mean that there is a correlation between A and B.

In the description of the embodiments of the present disclosure, the term "correspond" may indicate a direct or indirect corresponding relationship between two items, or may indicate an associated relationship between two items, or may indicate relationships such as indicating and being indicated, or configuring and being configured.

In some embodiments of the present disclosure, "predefined" may be implemented by prestoring corresponding codes, tables, or other means that may be used to indicate relevant information in devices (e.g., including AMP STAs and APs). The specific implementation method is not limited in the present disclosure. For instance, "being predefined" may refer to being defined in the protocol.

In some embodiments of the present disclosure, the term "protocol" may refer to a standard protocol in the communication field, including, for example, the LTE protocol, the NR protocol, and related protocols applied in the future communication systems, which is not limited in the present disclosure.

In the present disclosure, the phrase "a plurality of" refers to two or more. "And/or" describes an association relationship between associated objects, indicating that there may be three types of relationships. For example, A and/or B may represent three scenarios: A exists alone, A and B exist simultaneously, and B exists alone. The character "/" generally indicates that the relationship between the preceding and following associated objects is an "or" relationship.

The term "greater than or equal to" mentioned in the present disclosure may indicate either greater than or equal to, or greater than; similarly, "less than or equal to" may indicate either less than or equal to, or less than.

In addition, the step numbers described in the present disclosure only exemplarily illustrate one possible execution sequence among steps. In some other embodiments, the above steps may not be executed in the numbered order. For instance, two steps with different numbers may be executed simultaneously, or two steps with different numbers may be executed in an order opposite to the one illustrated in the figure, which is not limited in the embodiments of the present disclosure.

A person skilled in the art should appreciate that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. An information transmission method, performed by an ambient power, AMP, station, STA, the method comprising:
receiving a beacon frame transmitted by an access point, AP, wherein the beacon frame is carried in a physical layer protocol data unit, PPDU, the PPDU having a same frame format as a wake-up receiver, WUR, PPDU.

2. The method according to claim 1, wherein data of the beacon frame is carried in a frame body of a medium access control, MAC, frame format.

3. The method according to claim 2, wherein the MAC frame format further comprises a MAC header, the MAC header being used to carry type information of the PPDU.

4. The method according to claim 3, wherein the MAC header comprises a Frame Control field and an Identifier, ID, field; wherein the Frame Control field comprises a Type field and a Frame Body Present field, the Type field is used to indicate a type of the PPDU, and the Frame Body Present field is used to indicate a state of the frame body; and the ID field is used to carry an ID of the AP.

5. The method according to claim 4, further comprising:
parsing the beacon frame in a case where the Frame Body Present field indicates a first state and the Type field indicates a first value, wherein first value is used to indicate that the PPDU carries a WUR beacon frame; or
parsing the beacon frame in a case where the Type field indicates a second value, wherein the second value is used to indicate that the PPDU carries an AMP beacon frame; or
discarding the beacon frame in a case where the Frame Body Present field indicates a second state; or
discarding the beacon frame in a case where the Frame Body Present field indicates a first state and the Type field indicates a third value.

6. The method according to claim 4 or 5, further comprising:
parsing the beacon frame in a case where the ID field indicates a first ID; or
discarding the beacon frame in a case where the ID field indicates a second ID.

7. An information transmission method, performed by an access point, AP, the method comprising:
transmitting a beacon frame to an ambient power, AMP, station, STA, wherein the beacon frame is carried in a physical layer protocol data unit, PPDU, the PPDU having a same frame format as a wake-up receiver, WUR, PPDU.

8. The method according to claim 7, wherein data of the beacon frame is carried in a frame body of a medium access control, MAC, frame format.

9. The method according to claim 8, wherein the MAC frame format further comprises a MAC header, the MAC header being used to carry type information of the PPDU.

10. The method according to claim 9, wherein the MAC header comprises a Frame Control field and an identifier, ID, field; wherein the Frame Control field comprises a Type field and a Frame Body Present field, the Type field is used to indicate a type of the PPDU, and the Frame Body Present field is used to indicate a state of the frame body; and the ID field is used to carry an ID of the AP.

11. The method according to claim 10, wherein the method further comprises:
the Frame Body Present field indicates a first state and the Type field indicates a first value in a case where the beacon frame is transmitted to a first STA, wherein the first value is used to indicate that the PPDU carries a WUR beacon frame; or
the Type field indicates a second value in a case where the beacon frame is transmitted to a first STA, wherein the second value is used to indicate that the PPDU carries an AMP beacon frame; or
the Frame Body Present field indicates a second state in a case where the beacon frame is transmitted to a second STA; or
the Frame Body Present field indicates a first state and the Type field indicates a third value in a case where the beacon frame is transmitted to a second STA.

12. The method according to claim 10 or 11, wherein the method further comprises:
the ID field indicates a first ID in a case where the beacon frame is transmitted to a first STA; or
the ID field indicates a second ID in a case where the beacon frame is transmitted to a second STA.

13. An information transmission apparatus, comprising:
a receiving module, configured to receive a beacon frame transmitted by an access point, AP, wherein the beacon frame is carried in a physical layer protocol data unit, PPDU, the PPDU having a same frame format as a wake-up receiver, WUR, PPDU.

14. The apparatus according to claim 13, wherein data of the beacon frame is carried in a frame body of a medium access control, MAC, frame format.

15. The apparatus according to claim 14, wherein the MAC frame format further comprises a MAC header, the MAC header being used to carry type information of the PPDU.

16. The apparatus according to claim 15, wherein the MAC header comprises a Frame Control field and an Identifier, ID, field; wherein the Frame Control field comprises a Type field and a Frame Body Present field, the Type field is used to indicate a type of the PPDU, and the Frame Body Present field is used to indicate a state of the frame body; and the ID field is used to carry an ID of the AP.

17. The apparatus according to claim 16, further comprising:
a processing module, configured to parse the beacon frame in a case where the Frame Body Present field indicates a first state and the Type field indicates a first value, wherein the first value is used to indicate that the PPDU carries a WUR beacon frame; or
a processing module, configured to parse the beacon frame in a case where the Type field indicates a second value, wherein the second value is used to indicate that the PPDU carries an AMP beacon frame; or
a processing module, configured to discard the beacon frame in a case where the Frame Body Present field indicates a second state; or
a processing module, configured to discard the beacon frame in a case where the Frame Body Present field indicates a first state and the Type field indicates a third value.

18. The apparatus according to claim 16 or 17, further comprising:
a processing module, configured to parse the beacon frame in a case where the ID field indicates a first ID; or
a processing module, configured to discard the beacon frame in a case where the ID field indicates a second ID.

19. An information transmission apparatus, comprising:
a transmitting module, configured to transmit a beacon frame to an ambient power, AMP, station, STA, wherein the beacon frame is carried in a physical layer protocol data unit, PPDU, the PPDU having a same frame format as a wake-up receiver, WUR, PPDU.

20. The apparatus according to claim 19, wherein data of the beacon frame is carried in a frame body of a medium access control, MAC, frame format.

21. The apparatus according to claim 20, wherein the MAC frame format further comprises a MAC header, the MAC header being used to carry type information of the PPDU.

22. The apparatus according to claim 21, wherein the MAC header comprises a Frame Control field and an Identifier, ID, field; wherein the Frame Control field comprises a Type field and a Frame Body Present field, the Type field is used to indicate a type of the PPDU, and the Frame Body Present field is used to indicate a state of the frame body; and the ID field is used to carry an ID of an access point, AP.

23. The apparatus according to claim 22, wherein the apparatus further comprises:
a processing module configured that the Frame Body Present field indicates a first state and the Type field indicates a first value in a case where the beacon frame is transmitted to a first STA, wherein the first value is used to indicate that the PPDU carries a WUR beacon frame; or
a processing module configured that the Type field indicates a second value in a case where the beacon frame is transmitted to a first STA, wherein the second value is used to indicate that the PPDU carries an AMP beacon frame; or
a processing module configured that the Frame Body Present field indicates a second state in a case where the beacon frame is transmitted to a second STA; or
a processing module configured that the Frame Body Present field indicates a first state and the Type field indicates a third value in a case where the beacon frame is transmitted to a second STA.

24. The apparatus according to claim 22 or 23, wherein the apparatus further comprises:
a processing module configured that the ID field indicates a first ID in a case where the beacon frame is transmitted to a first STA; or
a processing module configured that the ID field indicates a second ID in a case where the beacon frame is transmitted to a second STA.

25. A communication device, comprising a processor and a memory, wherein the memory stores one or more computer programs that, when executed by the processor, cause the communication device to implement the method according to any one of claims 1 to 6 or the method according to any one of claims 7 to 12.

26. A computer-readable storage medium, storing one or more computer programs that, when executed by a processor, cause the processor to implement the method according to any one of claims 1 to 6 or the method according to any one of claims 7 to 12.

27. A chip, comprising a programmable logic circuit and/or one or more program instructions, wherein the chip, when running, is caused to implement the method according to any one of claims 1 to 6 or the method according to any one of claims 7 to 12.

28. A computer program product, comprising one or more computer instructions stored in a computer-readable storage medium, wherein the one or more computer instructions, when read and executed by a processor, cause the processor to implement the method according to any one of claims 1 to 6 or the method according to any one of claims 7 to 12.
